# EUROPÄISCHE PATENTSCHRIFT

(11) **EP 4 343 147 B1**
(45) Veröffentlichungstag und Bekanntmachung des Hinweises auf die Patenterteilung: **17.12.2025**
(21) Anmeldenummer: 23196921.3
(22) Anmeldetag: 12.09.2023
(51) Int. Cl.: F03D 80/00, F03D 80/50, E04H 12/34, E04G 3/28, E04G 3/24, E04G 23/08

(54) **VERFAHREN ZUM RÜCKBAU DES TURMS EINER WINDKRAFTANLAGE**
METHOD FOR DISMANTLING THE TOWER OF A WIND TURBINE
PROCÉDÉ DE MONTAGE EN ARRIÈRE D'UNE TOUR D'ÉOLIENNE

(30) Priorität: 23.09.2022 DE 202022105351 U
(43) Veröffentlichungstag der Anmeldung: 27.03.2024
(60) Teilanmeldung: 25207369.7
(73) Patentinhaber: Peter Herbers GmbH, 49716 Meppen (DE)
(72) Erfinder: Herbers, Peter, 49808 Lingen (DE)
(74) Vertreter: Patentanwälte Olbricht Buchhold Keulertz

(56) Entgegenhaltungen:
- DE-B3- 102016 113 227
- JP-A- 2003 176 911
- US-A1- 2022 251 866

## Beschreibung

Die Erfindung betrifft ein Verfahren zum Rückbau eines Turmbauwerks einer Windkraftanlage, nachfolgend kurz als Turm bezeichnet.

Aus der Praxis ist es als Verfahrensweise bekannt, zum Rückbau von Windkraftanlagen die jeweiligen Türme zu sprengen oder mit Abbruchgerät, wie beispielsweise mit einer Kugel, Betonzange oder dergleichen zurückzubauen, insbesondere wenn der jeweilige Turm aus einem Betonwerkstoff besteht. Diese Rückbauverfahren haben sich in der Praxis bewährt und erfordern vordergründig einen geringen Zeitaufwand. Problematisch ist, dass dafür entsprechende Freiflächen mit Sicherheitsabständen erforderlich sind und beispielsweise für das Sprengen Fallbetten ausgehoben werden müssen zur Aufnahme des zu sprengenden Turms. Die Aufnahme, das heißt die Entfernung der Turmbruchstücke aus dem Bodenmaterial ist besonders aufwendig und die Entsorgung sehr kostenintensiv.

US 2022/251866 A1 lehrt ein Verfahren für eine teilweise oder vollständige Demontage eines Turms einer Windenergieanlage. Um die Voraussetzungen für eine Demontage zur schaffen, werden vorbereitende Maßnahmen beschrieben, u. a. die Demontage von Einbaukomponenten, Rotorblättern und Gondel. Nach einem Trennen benachbarter Turmsegmente wird ein oberes Turmsegment am oberen Ende des Turms entfernt. Dazu kann das obere Turmsegment an einem Demontagekran angehängt werden, anschließend abgehoben und anforderungsabhängig gehandhabt werden. Das Trennen und Abheben von Turmsegmenten wird ebenso anforderungsabhängig wiederholt bis der Turm demontiert ist. Auf die Turmdemontage folgt der Abtransport des demontieren Turms, und zwar der Abtransport von Turmsegmenten oder zerkleinerten Turmsegmenten oder einzelnen Bestandteilen oder Komponenten.

DE 10 2016 113 227 B3 betrifft eine Arbeitsvorrichtung zum Durchführen von Arbeiten an einem Turm, bspw. für eine Demontage eines Turmbauwerks einer Windenergieanlage. Vorgeschlagen wird eine Arbeitsvorrichtung mit einem Grundgestell mit wenigstens drei, sich von einem Zentralkörper radial auswärts erstreckenden Auflagerarmen. Vorgesehen ist, dass die Auflagenarme auf die Oberseite des obersten Turmabschnitts aufgelegt werden. Weiterhin ist ein um eine senkrechte Achse drehbar angeordneter Auslegerarm beschrieben, welcher an dem Grundgestell befestigt ist und an welchem eine Arbeitskabine gegenüber dem Auslegerarm in der Höhe verstellbar anordnenbar ist.

JP 2003 176911 A beschreibt eine Vorrichtung für den Rückbau eines Schornsteins mit einem oberen und einem unteren Hubrahmen, welche einen freien Innenraum umfassen zur Anordnung an einem Schornstein in Gebrauchsstellung und welche jeweils begehbare Flächen aufweisen mit verschiebbaren Stahlplatten zur wahlweisen Annäherung der Flächen an den Schornstein.

Der Erfindung liegt die Aufgabe zugrunde, ein die Umwelt schonendes und wirtschaftliches Verfahren für den Rückbau des Turms anzugeben sowie ein Hilfsmittel, um dieses Verfahren durchzuführen.

Diese Aufgabe wird durch ein Verfahren nach den Merkmalen des Anspruchs 1 gelöst. Merkmale der Erfindung werden nachfolgend erörtert, wobei weitere Ausgestaltungen der Erfindung unter anderem in den Unteransprüchen beschrieben werden.

Die Erfindung schlägt mit anderen Worten vor, einen Turm, insbesondere einen Betonturm, nicht zu sprengen, sondern diesen im Rahmen eines geordneten Rückbauverfahrens stattdessen kontrolliert, sukzessive von oben nach unten in mehreren Abschnitten abzutragen. Als Hilfsmittel wird dafür eine nachfolgend kurz als Bühne bezeichnete Rückbaubühne vorgeschlagen, welche unter anderem dazu dient, erstens eine sichere Arbeitsumgebung für das mit dem Rückbau betraute Personal zu schaffen, und zweitens die für einen Rückbau notwendigen Arbeitsmittel bereitzuhalten.

Vorschlagsgemäß wird im Zuge des kontrollierten Rückbauverfahrens zunächst der Betonturm freigelegt, indem die oberhalb des Turms befindlichen Komponenten demontiert werden. Es kann sich dabei um eine aus Stahl bestehende obere Spitze des gesamten Turms handeln und jedenfalls um die sogenannte Kopfeinheit der Windkraftanlage, nämlich die Rotorflügel, eine Nabenabdeckung sowie das Maschinenhaus der Windkraftanlage, nämlich eine sogenannte Gondel, in welcher der elektrische Generator der Windkraftanlage, ein Getriebe und dergleichen untergebracht sind. Die erwähnten Komponenten werden kontrolliert demontiert und mittels einer Hebevorrichtung, wie exemplarisch eine Krananlage, abgesenkt. Sie können beispielsweise auf dem Boden abgelegt und dort zwischengelagert werden, oder sie können auf eine Transporteinrichtung gelegt werden, um zeitnah vom Aufstellungsort der Windkraftanlage an einen anderen Ort verbracht zu werden, oder sie können gegebenenfalls in einer bereitgestellten Verarbeitungsanlage verarbeitet werden, indem beispielsweise die Rotorflügel an Ort und Stelle zerkleinert werden, um deren Abtransport zu vereinfachen. Zudem kann vorgesehen sein, dass vor der Turmmontage die Spannlitzen im Turm gelockert und entfernt werden, insbesondere bei einer externen Vorspannung durch eine Spannlitzenanordnung innerhalb des Turms, und zwar entweder vor oder nach der Demontage der Kopfeinheit. Voraussetzend ist, dass die Spannlitzen in den Spannkanälen nicht einbetoniert wurden. Im Falle einbetonierter, mit dem Turm einen Verbund bildenden Spannlitzen, was als interne Vorspannung bezeichnet wird und regelmäßig angewandt wurde bei Betontürmen mit Baujahr älter als 2015, werden die Spannlitzen vorteilhafterweise zunächst nicht entfernt, sondern sukzessive mit dem Turm abgetragen, mit dem Nebeneffekt, dass der Turm während der Demontage stabilisiert ist.

Nachdem der aus Beton bestehende Turm freigelegt ist, kann ein oberer Abschnitt des Turms von dem restlichen Turm abgetrennt werden. Dabei verbleibt dieser obere Abschnitt, der auch als Oberteil bezeichnet wird, zunächst oberhalb des darunter befindlichen, restlichen Teil des Turms. Die Entfernung des Oberteils erfolgt also nicht beispielsweise durch eine kontrollierte, lokal begrenzte Sprengung, sondern vielmehr entlang einer definierten Bruch- oder Schnittlinie. Erst nach vollständiger Abtrennung des Oberteils wird dieses Oberteil mittels einer Hebevorrichtung kontrolliert abgesenkt und ebenfalls entweder auf dem Boden abgelegt, oder auf eine bereitgestellte Transporteinrichtung abgelegt, oder zu einer bereitgestellten Verarbeitungsanlage verbracht. Beispielsweise können die einzelnen Abschnitte in einer Verarbeitungsanlage kleinstückig zu Schüttgut zerkleinert werden, oder sie können in der Verarbeitungsanlage in vergleichsweise größere Segmente unterteilt werden, zugunsten eines möglichst einfachen Transports über öffentliche Verkehrswege. Abgetrennte Oberteile, insbesondere Abschnitte der Oberteile, können ebenso für eine Anschlussverwendung vorgesehen sein, was mit einer erheblichen Ressourcenschonung einhergeht. Beispielsweise können Oberteil(-abschnitte) zur Gründungshilfe bei schlechten Bodenbeschaffenheiten verwendet werden oder als Tragstruktur mit einem Dach versehen werden zur Ausbildung eines Unterstandes oder Ähnlichem.

Durch Wiederholung der zuvor beschriebenen Arbeitsweise wird der Turm nach und nach von oben nach unten abgetragen, bis er vollständig so weit demontiert ist, dass ein verbleibender Stumpf direkt am Boden entfernt werden kann, ohne eine Bühne, ein Gerüst oder dergleichen für eine Höhenarbeit benutzen zu müssen. Die abgetrennten Abschnitte des Turms werden entweder an Ort und Stelle bearbeitet, zum Beispiel in einer Zerkleinerungsanlage zu Schüttgut verarbeitet oder durch weitere Schnitte in Segmente von einer solchen Größe zerteilt, dass sie problemlos auf öffentlichen Verkehrswegen transportiert werden können, oder sie werden ohne eine weitere Bearbeitung in der Form, in welcher sie jetzt vorliegen, abtransportiert, beispielsweise um an anderer Stelle deponiert oder aufbereitet zu werden. Dieser Abtransport beginnt spätestens nach dem Rückbau des gesamten Turms, kann jedoch auch bereits begonnen werden, während der Rückbau des Turms noch nicht abgeschlossen ist. Der Turm verjüngt sich üblicherweise von unten nach oben. Insbesondere die oberen Abschnitte des Turms können daher gegebenenfalls auch ohne eine vorherige Zerkleinerung abtransportiert werden, ohne auf öffentlichen Verkehrswegen einen Sondertransport aufgrund von Überbreiten erforderlich zu machen. Dies kann damit einhergehen, dass kleinere Abschnitte, mit anderen Worten kürze Abschnitte, abgetrennt werden müssen. Im Allgemeinen kann es wirtschaftlich vorteilhafter sein, möglichst große Abschnitte abzutrennen, um beispielsweise eine minimale Anzahl von Schnitten und Hubarbeiten prozessbeschleunigend umsetzen zu müssen.

Das beschriebene Verfahren ist vordergründig zeitaufwendig. Überraschend hat sich jedoch herausgestellt, dass der Zeitaufwand im Vergleich dazu, die weit verteilten Bruchstücke aufsammeln zu müssen, die insbesondere bei einer Sprengung des Turms entstehen, nicht nachteilig groß ist. Insbesondere ist es für landwirtschaftlich genutzte Flächen vorteilhaft, dass keine übersehenen Bruchstücke als Fremdkörper im Boden verbleiben können, die ansonsten landwirtschaftliche Arbeiten behindern und gegebenenfalls landwirtschaftliche Geräte beschädigen könnten oder bei der Erzeugnisernte, exemplarisch bei der Kartoffelernte, eingesammelt werden müssten. Im Ergebnis wird durch das vorgeschlagene Verfahren ein Rückbau des Turms bewirkt, der als kontrollierter oder geordneter Rückbau bezeichnet werden kann.

Erfindungsgemäß werden in den Turm Bohrungen eingebracht, die dazu dienen, eine Bühne, insbesondere eine nachfolgend noch näher zu erläuternde Bühne, an den Turm anhängen zu können. Die Bühne kann insbesondere genutzt werden, um Sägeschnitte in Art von Trennlinien in den Turm einbringen zu können und so das Oberteil zu erzeugen, indem ein jeweils oberster Abschnitt von dem jeweils verbleibenden Rest des Turms abgetrennt wird. An der Bühne können dementsprechend Vorsprünge vorhanden sein, beispielsweise in Form von Bolzen, die in die zuvor geschaffenen Bohrungen eingreifen können, so dass auf diese Weise die Bühne formschlüssig am Turm gehalten werden kann. Vorteilhaftweise kann die Bühne ein ringförmiges Gestell aufweisen, das um einen freien Innenraum verläuft, der so groß bemessen ist, dass er wenigstens dem Durchmesser des Turms in den Höhen entspricht, in denen die Bühne verwendet werden soll. Jedoch ist die Durchführung des Verfahrens nicht gebunden an eine konkrete Ausgestaltung einer Bühne.

Für die Halterung der Bühne am Turm müssen die Bohrungen in der jeweils geeigneten Höhe am Turm erzeugt werden. Dafür kann die Bühne vorteilhaftweise Kernbohrgeräte aufweisen. In einer Ausgestaltung des Verfahrens kann daher vorgesehen sein, dass der Turm zunächst gedanklich bzw. planerisch in mehrere übereinander angeordnete Abschnitte unterteilt wird. Diese zum Rückbau vorgesehenen Abschnitte stellen dann jeweils nach und nach, nach dem Rückbau eines jeweils darüber befindlichen Oberteils, das jeweilige neue Oberteil dar, welches vom restlichen Turm abgetrennt wird. Die Bohrungen können dabei vorteilhaft oberhalb des Schwerpunkts des jeweiligen Abschnitts eingebracht werden, so dass sie später dazu genutzt werden können, das betreffende Oberteil mittels einer Hebevorrichtung formschlüssig zu erfassen und kontrolliert nach unten abzusenken. Die Anordnung der Bohrungen oberhalb des Schwerpunkts stellt dabei erstens sicher, dass der betreffende Abschnitt lagestabil in dem jeweils verwendeten Hebegeschirr hängt. Zweitens können die Bohrungen so nahe unterhalb der geplanten Säge- oder Trennlinie zwischen zwei Abschnitten in den Turm eingebracht werden, dass von der Bühne aus das vorgesehene Werkzeug, zum Beispiel eine Säge, problemlos an die vorgesehene Stelle herangeführt werden kann, wo die Säge- oder Trennlinie erzeugt werden soll. Beispielsweise können die Bohrungen jeweils etwa 1 m unterhalb der vorgesehenen Säge- oder Trennlinie erzeugt werden.

In einer Ausgestaltung des Verfahrens werden zunächst sämtliche Bohrungen in sämtlichen gewünschten Höhen am Turm erzeugt, z.B. von einem Korb aus, der mittels einer Hebevorrichtung an die jeweils gewünschte Stelle am oder im Turm gebracht wird. Alternativ kann vorgesehen sein, dass zunächst die Bühne an den Turm mittels Hebevorrichtung geführt wird und sämtliche oder nur einige, beispielsweise jeweils nur die für den Rückbau des nächsten Oberteils notwendigen Bohrungen, von der Bühne aus in den Turm eingebracht werden. Dabei kann die Bühne beispielsweise unterhalb der einzubringenden Bohrungen am Hebezeug einer Krananlage hängend angeordnet werden. Weiterhin kann vorgesehen sein, dass die Bühne ein Hebezeug mit einem Arbeitskorb oder dergleichen aufweist, der insbesondere mittels des Bühnenhebezeugs an die jeweils gewünschte Stelle des Turms gebracht wird, so dass die Bohrungen unterhalb der Bühne in den Turm eingebraucht werden können, währenddessen die Bühne selbst an einem Kran hängt oder währenddessen die Bühne in den zuvor eingebrachten, weiter oben angeordneten Bohrungen formschlüssig am Turm gehalten wird.

Sofern die erforderlichen Bohrungen erzeugt wurden, kann vorgesehen sein, die Bühne in die Bohrungen des Abschnitts einzuhängen, der sich als zweitoberster Abschnitt unmittelbar unter dem Oberteil des Turms befindet. Die Erzeugung der Trennlinie bewirkt dann, dass das Oberteil von dem Rest des Turms abgetrennt wird und anschließend vom Turm entnommen und abgesenkt werden kann.

Die Höhen der Abschnitte können in einer Ausgestaltung des Verfahrens in der Art bestimmt werden, dass das Gewicht jedes einzelnen Abschnitts innerhalb bestimmter Gewichtsgrenzen bleibt. Maßgeblich ist hierfür die zulässige Belastung der Hebevorrichtung. Auf diese Weise kann sichergestellt werden, dass ein abgetrenntes Oberteil von der Hebevorrichtung aufgenommen und abgesenkt werden kann, ohne in gegebenenfalls großer Höhe eine weitere Bearbeitung, insbesondere Zerteilung, des abgetrennten Oberteils zu erfordern. Der Durchmesser des Turms verjüngt sich vom Boden bis zum oberen Ende des Turms. Um die Hebevorrichtung optimal auszulasten und beispielsweise die Anzahl von erforderlichen Kranfahrten möglichst gering zu halten, können die Abschnitte, in welche der Turm planerisch unterteilt wird, vorteilhaft so bestimmt werden, dass sie innerhalb der Gewichtsgrenzen eines vorbestimmten Höchstgewichts liegen, nämlich der zulässigen Kranlast, und dass dabei das Gewicht der jeweiligen Abschnitte möglichst weit an dieses höchstzulässige Gewicht angenähert ist, so dass dementsprechend die oberen Abschnitte länger sind als die unteren.

Vorteilhaft kann eine Gewichtsentlastung des Oberteils in der Art vorgesehen sein, dass das Oberteil nicht mit seinem Eigengewicht auf dem verbleibenden Rest des Turms ruht, wenn die Trennlinie erzeugt wird, beispielsweise wenn die Sägeschnitte in den Turm eingebracht werden. Auf diese Weise ist sichergestellt, dass die verwendeten Werkzeuge nicht durch das Eigengewicht des Oberteils blockiert werden. Zu diesem Zweck kann eine Traverse in Bohrungen des Oberteils eingreifen, wobei die Traverse an die Hebevorrichtung angehängt ist und auf diese Weise eine Hebevorrichtung eine aufwärts gerichtete Zugkraft auf das Oberteil ausüben kann, während die Trennlinie erzeugt wird. Die so im Oberteil erzeugte, aufwärts gerichtete Zugspannung bewirkt die gewünschte Gewichtsentlastung. Die Verwendung einer Traverse stellt in diesem Zusammenhang sicher, dass anders als bei der Verwendung eines an einem Haken angeschlagenen, A-förmig nach unten verlaufenden Kettengeschirrs keine nach innen wirkenden Kräfte an zwei gegenüberliegenden Stellen auf das Oberteil einwirken. Eine Überlastung des Betonwerkstoffs im Bereich der Bohrungen, insbesondere knapp oberhalb der Bohrungen, wird auf diese Weise zuverlässig vermieden.

Zur Erzeugung von Sägeschnitten kann vorteilhaft vorgesehen sein, dass zunächst ein erstes Sägeblatt mit einer ersten Schnittbreite verwendet wird, nämlich entsprechend der Dicke dieses Sägeblattes. Bei der Vertiefung des Sägeschnitts kann für einen tieferen Einschnitt anschließend ein zweites Sägeblatt vorgesehen sein, welches dünner ist und dementsprechend eine zweite Schnittbreite aufweist, die geringer ist als die erste Schnittbreite. Durch diese Abfolge zweier unterschiedlicher Schnittbreiten kann erreicht werden, dass das zweite Sägeblatt möglichst ungehindert und frei beweglich ist, und dass ein Klemmen dieses zweiten Sägeblattes vermieden wird.

Die beiden unterschiedlichen Sägeblätter können dabei nicht nur unterschiedlich dick sein, sondern, wenn sie als Kreissägeblätter ausgestaltet sind, auch unterschiedliche Durchmesser aufweisen. Dabei kann vorteilhaft das erste, dickere Sägeblatt einen kleineren Durchmesser aufweisen als das nachfolgend verwendete zweite Sägeblatt. Aufgrund der größeren Dicke bei gleichzeitig geringerem Durchmesser ist das erste Sägeblatt besonders stabil, so dass dieses zunächst den ersten Schnitt in den Turm einbringen kann, ohne zu flattern oder Ähnliches. Das anschließend verwendete zweite Sägeblatt ermöglicht aufgrund seines größeren Durchmessers ein tieferes Eindringen in die Turmwand, und da es gleichzeitig auch eine geringere Materialstärke aufweist, wird es durch den zuvor geschaffenen Sägeschnitt, in den es eintaucht, geführt und auf diese Weise gegen Flattern gesichert. Auf diese Weise kann ein störungsfreier, rascher Arbeitsfortschritt bei der Erzeugung der Trennlinie erreicht und das verwendete Material geschont werden.

Die Sägen können vorteilhaft auf einem oder mehreren Sägeschlitten geführt werden, welche auf einer Führungsschiene gelagert sind. Sofern zwei Sägen vorgesehen sind, können diese in einem Kreisbogen von wenigstens 180° um den Turm geführt werden.

Wenn das jeweilige Oberteil von dem Rest des Turms abgetrennt worden ist, kann es in einer Ausgestaltung des Verfahrens zunächst auf dem restlichen Turm abgestellt werden, so dass beispielsweise die oben erwähnte Traverse aus dem Oberteil ausgehängt werden kann. Anschließend kann nun die Bühne an die Traverse angehängt werden, so dass sie im Anschluss daran aus den Bohrungen ausgehängt werden kann, in denen sie bislang gehalten war, nämlich aus den Bohrungen des Abschnitts, der sich unmittelbar unterhalb des Oberteils befindet. Alternativ kann vorgesehen sein, die Bühne nicht an die Traverse zu hängen, sondern anderweitig mit dem Hebezeug der Hebevorrichtung zu verbinden. Die Bühne kann nun mittels der Hebevorrichtung abgesenkt und in die Bohrungen des nächst tieferen Abschnitts eingehängt werden. Wenn die Bühne auf diese Weise in ihrer neuen Position sicher am Turm gehalten ist, kann sie von der Traverse beziehungsweise von dem Hebezeug ausgehängt werden, so dass die Traverse nun in das bereits abgetrennte Oberteil eingehängt werden kann und das Oberteil mittels der Hebevorrichtung vom restlichen Turm abgehoben und dann entfernt werden kann, beispielsweise nach unten abgesenkt werden kann. Derweil kann auf der Bühne bereits weitergearbeitet und der neue Sägeschnitt erzeugt werden und gegebenenfalls weitere Bohrungen in den Turm eingebraucht werden, so dass ein rascher Arbeitsfortschritt unterstützt wird.

Alternativ dazu, die Bühne mittels der Hebevorrichtung zu ihren jeweils gewünschten Positionen zu verbringen, kann eine selbstkletternde Bühne verwendet werden, also eine Bühne, die durch geeignete Stütz- und Haltemittel autark von einer ersten in eine zweite Position am Turm verbracht werden kann, die sich in einer anderen Höhe als die erste Position befindet. Auf diese Weise können die erforderlichen Kranzeiten verringert werden, was angesichts hoher Mietkosten wirtschaftlich vorteilhaft ist. Da sich der Durchmesser des Turms nach unten erweitert, ist eine autarke, selbstkletternde Fortbewegung der Bühne, insbesondere eine Bühne mit einem ringförmigen Gestell, insofern sicher, als ein tiefer Absturz ausgeschlossen werden kann. Aus Gründen des Unfallschutzes, insbesondere zur Sturzsicherung für das Personal, kann die Bühne dem Turm eng anliegen, wobei die entsprechenden Sicherungselemente bei einer Höhenveränderung der Bühne nachgeführt und an den sich ändernden Durchmesser des Turms angepasst werden, so dass die Sicherungselemente bei einer unkontrollierten Abwärtsbewegung der Bühne wie ein Bremsschuh in Kontakt mit dem sich nach unten erweiternden Turm geraten und auf diese Weise automatisch eine Bremse gegen eine weitere unkontrollierte Abwärtsbewegung gewährleistet ist.

Die selbstkletternde Bühne, welche zum Aufwärtsklettern geeignet ist, kann am Boden um den Turm herum aufgebaut werden und anschließend autark in die gewünschte höhere Position aufsteigen. Dazu können beispielsweise zunächst erste Bohrungen in den Turm eingebracht werden, in die erste Stützarme der am Boden befindlichen Bühne eingreifen, so dass die Bühne nun formschlüssig am Turm gesichert ist. Mittels der ersten Stützarme wird die Bühne angehoben und in eine Höhe über dem Boden gebracht, wo dann von der Bühne aus die nächsten Bohrungen in den Turm eingebracht werden. Gegebenenfalls kann die Bühne mittels der ersten Stützarme in mehreren Stufen oder Schritten angehoben werden, so dass mehrere Bohrungen in unterschiedlichen Höhen in den Turm eingebracht werden können. Zweite Stützarme der Bühne greifen dann in diese nächsten Bohrungen ein, welche die Bühne ebenfalls formschlüssig am Turm sichern. Die ersten Stützarme können nun aus den ersten Bohrungen entfernt werden. Mittels der zweiten Stützarme wird die Bühne angehoben und noch weiter in die Höhe gebracht, wo dann die nächsten Bohrungen erzeugt werden, gegebenenfalls schrittweise in unterschiedlichen Höhen. Durch den abwechselnden Einsatz der ersten und zweiten Stützarme kann die Bühne praktisch beliebig hochklettern, so dass sämtliche für den Rückbau erforderlichen Bohrungen erzeugt werden können, ohne eine Hebevorrichtung zu erfordern. Die Einsatz- und somit Mietdauer eines Krans kann auf diese Weise erheblich verringert werden, da der Kran erst benötigt wird, wenn sämtliche Vorbereitungen abgeschlossen und die Bohrungen erzeugt worden sind und das erste, oberste Oberteil des Turms vom restlichen Turm abgetrennt werden soll. Wenn in einem Windpark mehrere Windkraftanlagen rückgebaut werden sollen, kann die verringerte Krandauer, die pro Windkraftanlage erforderlich ist, zu einer erheblichen Beschleunigung des gesamten Rückbauprojekts beitragen.

Es kann aber auch eine selbstkletternde Bühne genutzt werden, um abwärts zu klettern. Die Bühne kann beispielsweise konstruktiv so ausgestaltet sein, dass sie wahlweise aufwärts oder abwärts klettern kann, gegebenenfalls kann jedoch auch eine Bühne verwendet werden, die ausschließlich abwärts klettern kann. Für das Absenken der einzelnen abgetrennten Abschnitte des Turms ist ohnehin eine Hebevorrichtung erforderlich. Gegebenenfalls kann, je nach Organisation der Arbeitsabläufe, die Hebevorrichtung bereits an der Baustelle aufgebaut sein, wenn mit der Erzeugung der Bohrungen begonnen wird, beispielsweise weil die Hebevorrichtung zuvor zur Demontage der Kopfeinheit der Windkraftanlage genutzt wurde. Es kann daher vorgesehen sein, dass die Bohrungen beispielsweise von einem an der Hebevorrichtung gehaltenen Arbeitskorb aus erzeugt werden. Die selbstkletternde Bühne klettert in diesem Fall nicht autark am Turm aufwärts, sondern wird neben dem Turm montiert, ohne den Turm zu umringen, und sie wird mittels der Hebevorrichtung zu ihrer ersten, obersten Position am Turm verbracht, nachdem die Bohrungen erzeugt worden sind. Wenn dann das erste Oberteil vom restlichen Turm abgetrennt worden ist und dabei aus Gründen der oben erwähnten Gewichtsentlastung bereits an die Hebevorrichtung angeschlagen worden ist, kann der weiter oben beschriebene Wechsel entfallen, zunächst das Oberteil von der Hebevorrichtung aus- und die Bühne an die Hebevorrichtung anzuhängen und später das Oberteil wieder an die Hebevorrichtung anzuhängen. Vielmehr kann das Oberteil an der Hebevorrichtung angeschlagen verbleiben und mittels der Hebevorrichtung vom Turm abgehoben und abgesetzt werden, während die selbstkletternde Bühne unmittelbar nach Beendigung des Trennschnitts autark in die nächst niedrigere Position verbracht werden kann, so dass ein rascher Arbeitsfortschritt unterstützt wird.

In einer Ausgestaltung kann vorgesehen sein, dass im Rahmen des zuvor beschriebenen Verfahrens zum Rückbau eines Turms eine Bühne verwendet wird, welche nachfolgend näher beschrieben wird.

Die Bühne weist ein ringförmiges Gestell auf, das um einen freien Innenraum verläuft, der so groß bemessen ist, dass er wenigstens dem Durchmesser des Turms in den Höhen entspricht, in denen die Bühne verwendet werden soll. Vorteilhaft kann die Bühne über die gesamte Höhe des Turms verwendet werden, so dass kein Wechsel zwischen zwei unterschiedlichen Bühnen erforderlich ist. Die Bühne kann dementsprechend aus mehreren, einzeln problemlos transportierbaren Baugruppen bestehen und am Boden um den Turm herum zusammengebaut werden.

Die Bühne weist wenigstens zwei Vorsprünge auf, die in radialer Richtung beweglich sind, so dass der Abstand der Vorsprünge zueinander verändert werden kann und die Vorsprünge wahlweise in die zuvor in den Turm eingebrachten Aussparungen eingreifen können, um die Bühne formschlüssig am Turm sichernd zu tragen, oder die Vorsprünge aus den Aussparungen herausgezogen werden können, um die Bühne versetzen zu können. Durch diesen formschlüssigen Halt ist die Sicherheit der Bühne auch dann gewährleistet, wenn hydraulische oder elektrische Systeme ausfallen sollten, die ansonsten dazu geeignet sein könnten, die Bühne am Turm zu sichern.

Die Bühne weist weiterhin eine Plattform auf, die für den Aufenthalt von Personen bestimmt ist, betreffend ihre Tragfähigkeit und die zugehörigen Sicherungseinrichtungen, wie beispielsweise in Form eines Geländers oder in Form von Stellen, an denen jeweils eine als "Lifeline" bezeichnete Sicherungsleine angeschlagen werden kann. Das Personal auf der Bühne kann beispielsweise mit manuell gehaltenen Geräten den Rückbau bewirken, oder es können Werkzeuge bedient und überwacht werden, die nicht manuell gehalten werden, sondern die an der Bühne angebracht sind und beispielsweise maschinell bewegt werden. Ebenso wird durch die Plattform ein Tätigkeitsbereich geschaffen, um dem Personal beispielsweise die Wartung von Maschinen und den Austausch von Verbrauchsmitteln, wie Betriebsmittel, Verschleißteile oder dergleichen zu ermöglichen. Durch die ringförmige Ausgestaltung des Gestells kann der gesamte Umfang des Turms von der Bühne aus bearbeitet werden. Beispielsweise kann dafür die Plattform auf dem Gestell um den Turm umlaufend beweglich ausgestaltet sein, beispielsweise mitsamt der Sägen und Arbeitsgeräte, oder die Plattform kann sich über das gesamte Gestell hinweg ebenfalls ringförmig um den Turm erstrecken.

Schließlich weist die Bühne eine Sturzsicherung in der Art auf, dass ein Spalt zwischen dem Gestell oder der Plattform einerseits und dem Turm andererseits so weitgehend geschlossen werden kann, dass eine Person nicht durch diesen Spalt herabstürzen kann. Aufgrund der verschiedenen, höhenabhängig unterschiedlichen Turmdurchmesser ist diese Sturzsicherung in radialer Richtung beweglich ausgestaltet, so dass sie wahlweise unterschiedlich weit nach innen bewegt werden kann, um sich eng an den geringen Turmdurchmesser in großer Höhe anzunähern, oder wahlweise unterschiedlich weit radial nach außen bewegt werden kann, um in tieferen Abschnitten des Turms an den dort größeren Turmdurchmesser angepasst zu werden.

In einer Weiterentwicklung kann die Bühne ein Hebezeug mit einem Arbeitskorb oder dergleichen aufweisen, so dass Arbeiten am Turm in einer bestimmten Höhe unterhalb der Bühne ermöglicht werden.

In einer Ausgestaltung kann vorgesehen sein, dass die Vorsprünge als Bolzen ausgestaltet sind, wobei die Bolzen wahlweise in die zuvor in den Turm eingebrachten Aussparungen eingreifen können, um die Bühne formschlüssig am Turm zu sichern, oder aus den Aussparungen herausgezogen werden können, um die Bühne versetzen zu können. Vorteilhaft können die Aussparungen als Bohrungen verwirklicht sein, deren Ausgestaltung mit den Bolzen korrespondiert, so dass eine formschlüssigen Verbindung zwischen Turm und Bühne ausgebildet wird, die wahlweise lösbar ist. Zur Einbringung der erforderlichen Bohrungen kann die Bühne eines oder mehrere Kernbohrgeräte aufweisen.

Die Bühne kann vorteilhaft wenigstens zwei Stützelemente aufweisen, die am Umfang der Bühne von den Vorsprüngen entfernt und auch mit einem Abstand voneinander angeordnet sind. Diese Stützelemente sind dazu bestimmt, von außen an die Turmwand angelegt zu werden. Sie bewirken einerseits eine Kippsicherung, beispielsweise wenn die Bühne mit lediglich zwei gegenüberliegenden Bolzen oder dergleichen in zwei gegenüberliegende Bohrungen des Turms eingreift, was aus Kosten- und Gewichtsgründen vorteilhaft sein kann. In diesem Fall können die beiden Stützelemente jeweils um 90° versetzt zu den Bolzen und einander gegenüberliegend angeordnet sein, um Kippbewegungen der Bühne zuverlässig auszuschließen. Die Stützelemente stellen zudem eine zusätzliche Sicherheitseinrichtung dar, insbesondere wenn sie gegen eine ungewollte, radial nach außen gerichtete Bewegung gesichert werden können, beispielsweise durch einen selbsthemmenden Spindeltrieb, durch einen Hydraulikzylinder mit Sperrventil oder dergleichen. Da sich der Turm nach unten hin erweitert, stellen die dem Turm anliegenden Stützelemente eine Bremse dar, die eine unkontrollierte Abwärtsbewegung der Bühne auch dann verhindert, wenn die Aufhängung der Bühne in den Bohrungen des Turms versagen sollte. Bei Bedarf können die Stützelemente jedoch radial nach außen verfahren werden, um eine gewünschte Absenkbewegung der Bühne zu einem größeren Turmdurchmesser hin zu ermöglichen.

Im Wesentlichen liegt dieser Erfindung der Gedanke zugrunde, den Turm Stück für Stück abzutragen. Dazu wird der Turm zunächst freigelegt, das heißt sämtliche Bestandteile einer Kopfeinheit der Windkraftanlage werden abgenommen, wie beispielsweise die Rotorflügel, eine Nabenabdeckung und ein das obere Ende der Windkraftanlage bildende Maschinenhaus. Nachdem der aus Beton bestehende Turm freigelegt ist, ist vorgesehen, einen oberen Abschnitt des Turms, welcher nachfolgend weiterhin als Oberteil bezeichnet wird, von dem restlichen Turm abzutrennen. Im Sinne eines ganzheitlichen Ansatzes ist das vorliegende Rückbauverfahren bzw. die Bühne wirtschaftlich besonders vorteilhaft, als dass dafür lediglich auf einen Großkran zurückgegriffen wird, welcher, wie aus der Praxis bekannt, für die Demontage der Kopfeinheit sowieso erforderlich ist. Ein Mehraufwand durch eine AN- und Abfahrt sowie Auf- und Abbau eines Großkrans entsteht nicht.

Für die Einbringung der Trennlinien kann die Bühne in einer vorteilhaften Ausgestaltung eine oder mehrere Sägen aufweisen, wobei die jeweilige Säge erstens in radialer Richtung beweglich ist, um nach und nach in den Betonwerkstoff des Turms eindringen und einen Sägeschnitt erzeugen zu können. Zweitens ist die Säge auch in Umfangsrichtung beweglich gegenüber den am Turm festgelegten Vorsprüngen der Bühne, so dass der Sägeschnitt rings um den Turm erzeugt werden kann, um ein Oberteil von dem restlichen Turm abzutrennen.

Um eine Säge in Umfangsrichtung um den Turm herumführen zu können, können ein oder mehrere Sägeschlitten oder dergleichen vorgesehen sein, welche auf einer Führungsschiene geführt sind und welche die Säge(n) halten. Die Führungsschiene(n) können sich auf der Bühne ringartig um den Turm erstrecken, wobei bei der Anordnung von zwei Kreissägen jede Säge in einem Kreisbogen von 180 ° um den Turm geführt ist. Für einen Ausgleich des sich mit der Höhe des Turms ändernden Durchmessers können die Sägen, insbesondere die Sägeblätter, teleskopierbar gehalten sein, damit die Sägeblätter mit zunehmender Turmhöhe der Turmmittelachse angenähert werden können, so dass sämtliche Oberteile in beliebiger Turmhöhe abtrennbar sind. Vorteilhaft kann auf einem Sägeschlitten zusätzlich ein Kernbohrgerät angeordnet sein, mit welchem die Bohrungen in den Turm eingebraucht werden können.

Die Säge kann vorteilhaft als Kreissäge ausgestaltet sein. Diese Bauform hat sich in der Praxis bewährt, da sie insbesondere auch eine weitgehend maschinelle Handhabung der Säge ermöglicht, so dass eine körperliche Belastung des Personals weitgehend vermieden werden kann.

Zur Erzeugung von Sägeschnitten kann die Säge vorteilhaft unterschiedliche Sägen oder Sägeblätter aufweisen. Zunächst ist dabei vorteilhaft ein erstes Sägeblatt anordnenbar, welches eine bestimmte erste Schnittbreite aufweist, nämlich entsprechend der Dicke dieses Sägeblattes. Bei der Vertiefung des Sägeschnitts kann für einen tieferen Einschnitt anschließend ein zweites Sägeblatt vorgesehen sein, welches dünner ist und dementsprechend eine zweite Schnittbreite aufweist, die geringer ist als die Schnittbreite des ersten Sägeblattes. Durch diese Abfolge zweier unterschiedlicher Sägeblätter kann erreicht werden, dass das zweite Sägeblatt möglichst ungehindert und frei beweglich ist, und dass ein Klemmen dieses zweiten Sägeblattes vermieden wird.

Die beiden unterschiedlichen Sägeblätter können dabei nicht nur unterschiedlich dick sein, sondern, wenn sie als Kreissägeblätter ausgestaltet sind, auch unterschiedliche Durchmesser aufweisen. Dabei kann vorteilhaft das erste, dickere Sägeblatt einen kleineren Durchmesser aufweisen als das nachfolgend verwendete zweite Sägeblatt. Aufgrund der größeren Dicke bei gleichzeitig geringerem Durchmesser ist das erste Sägeblatt besonders stabil, so dass dieses zunächst den ersten Schnitt in den Turm einbringen kann, ohne zu flattern oder Ähnliches. Das anschließend verwendete zweite Sägeblatt ermöglicht aufgrund seines größeren Durchmessers ein tieferes Eindringen in die Turmwand, und da es gleichzeitig auch die geringere Materialstärke aufweist, wird es durch den zuvor geschaffenen Sägeschnitt, in den es eintaucht, geführt und auf diese Weise gegen Flattern gesichert. Auf diese Weise kann ein störungsfreier, rascher Arbeitsfortschritt bei der Erzeugung der Trennlinie erreicht und das verwendete Material geschont werden.

In einer weiteren Ausgestaltung kann die Bühne nicht nur mit einer, sondern mit zwei oder mehr Sägen ausgestattet sein. Die Sägen können vorteilhaft gleichmäßig am Umfang der Bühne verteilt angeordnet sein, so dass im Betrieb der Sägen auftretende Kräfte sich gegenseitig kompensieren können. Die Länge der von jeder Säge zu erzeugenden Sägeschnitte wird zudem im Vergleich zur Verwendung einer einzigen Säge reduziert, was einen raschen Arbeitsfortschritt begünstigt. Besonders bevorzugt, können zwei Sägen vorgesehen sein, welche einander gegenüberliegend angeordnet sind. Dies bietet sowohl Kosten- und Gewichts-Vorteile im Vergleich zu einer höheren Anzahl von Sägen als auch einen beschleunigten Arbeitsfortschritt im Vergleich zu nur einer Säge.

Regelmäßig kann für den Betrieb einer Säge oder eines Bohrgeräts ein Prozessfluid erforderlich sein, insbesondere Wasser, zur Kühlung, zum Abtransport von Schnittgut, als Gleitmittel, zur Verhinderung einer Staubentwicklung und Ähnlichem. In einer Ausgestaltung kann die Bühne einen oder mehrere (Wasser)Tanks aufweisen, welche vorteilhaft unterhalb der Bühne, insbesondere unterhalb der Plattform an dem Gestell der Bühne angeordnet sein können, um eine Säge während der Einbringung einer Trennlinie mit ausreichend Prozessfluid versorgen zu können. Durch die Anordnung eines Tanks an der Bühne kann auf ein energieintensives Aufwärtspumpen des Fluids verzichtet werden. Eine Wärmedämmung eines Tanks kann das Gefrieren des Fluids bei niedrigen Umgebungstemperaturen unterbinden.

Die Bühne stellt somit ein Hilfsmittel dar, mit dem das Personal auf der Bühne beispielsweise mit manuell gehaltenen Geräten die Trennlinien zwischen den einzelnen Abschnitten erzeugen kann, oder es kann Trennwerkzeuge wie die oben bereits erwähnten Sägen bedienen und überwachen, die nicht manuell gehalten werden, sondern beispielsweise maschinell vorgeschoben werden. Zudem kann das auf der Bühne befindliche Personal die Sägeblätter auf einfache Weise wechseln, wenn Sägeblätter mit unterschiedlichen Schnittbreiten und Durchmessern verwendet werden sollen oder wenn ein verschleißbedingter Austausch notwendig ist.

Der freie Innendurchmesser des ringförmigen Gestells kann vorteilhaft wenigstens ca. 2,8 m betragen und ist vorteilhafterweise erweiterbar. Die in der Praxis häufig anzutreffenden Bauformen von Betontürmen bei Windkraftanlagen weisen am Boden typischerweise ihren größten Durchmesser im Bereich von 6 bis 10 m auf, so dass die Bühne für den Rückbau dieser in der Praxis verbreiteten Türme der Windkraftanlagen eingesetzt werden kann.

Ausführungsbeispiele der Erfindung werden anhand der rein schematischen Darstellungen nachfolgend näher erläutert, wobei einzelne Merkmale oder eine Kombination von Merkmalen der dargestellten Ausführungsbeispiele auch unabhängig von übrigen Ausgestaltungen bei einer Bühne verwirklicht sein können.

Dabei zeigen die
- Fig. 1 bis 6: eine Bühne in perspektivischer Ansicht und in unterschiedlichen Konfigurationen,
- Fig. 7: einen Abschnitt einer Bühne in perspektivischer Ansicht, und
- Fig. 8: den Bühnenabschnitt aus Fig. 7 in einer Seitenansicht im Querschnitt.

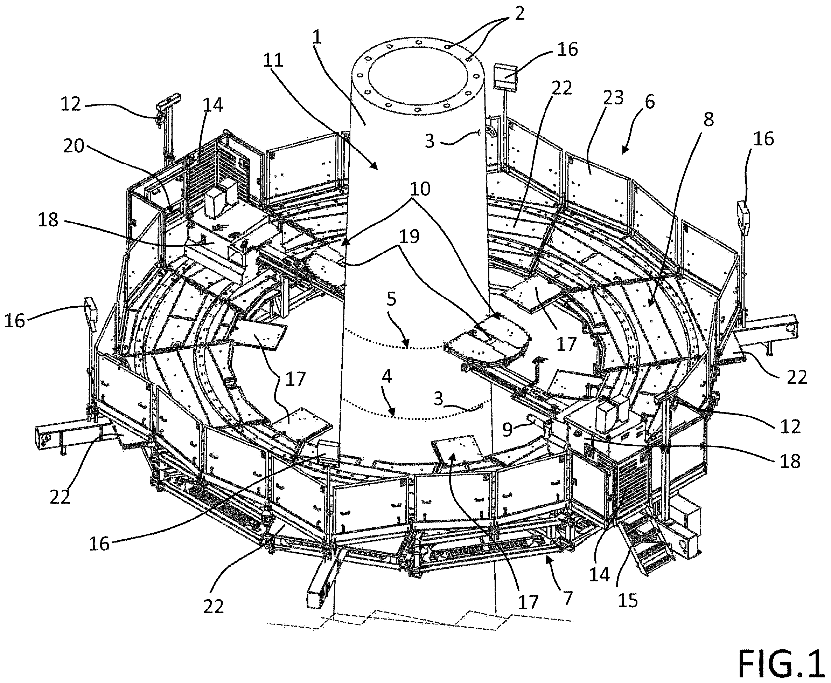

In Fig. 1 ist ein aus Beton bestehender Turm 1 einer Windkraftanlage dargestellt. Innerhalb der Turmwand verlaufen Spannkanäle 2 mit darin angeordneten Spannlitzen, die während der Nutzungsdauer der Windkraftanlage einzelne ringförmige Segmente des Turms 1 unter Spannung halten und auf diese Weise den Turm 1 aussteifen. Eine Kopfeinheit der Windkraftanlage ist bereits demontiert worden. Hingegen wurden die Spannlitzen zum Errichtungszeitpunkt des Turms regelmäßig in den Spannkanälen einen festen Verbund mit dem Turm bildend eingegossen (interne Vorspannung), so dass die Spannlitzen im Turm verbleiben können. Diese können gar dazu beitragen, den Turm während des Rückbaus zu stabilisieren. In den Turm sind in unterschiedlichen Höhen jeweils zwei gegenüberliegende Bohrungen 3 eingebracht worden, wobei sämtliche Bohrungen 3 vor der Demontage zunächst eingebracht worden sein können oder die Bohrungen 3 im Zuge des Rückbaus eingebracht werden. Die unteren Bohrungen 3 liegen auf Höhe einer gestrichelt angedeuteten Bohrungslinie 4 und damit unterhalb einer ebenfalls gestrichelt angedeuteten Trennlinie 5, wobei die beiden Bohrungs- und Trennlinien 4 und 5 jeweils horizontal und als gedachte Linien um den Turm 1 verlaufen.

Eine Bühne 6 weist ein ringförmiges, bei dem dargestellten Ausführungsbeispiel polygonal ausgestaltetes, Gestell 7 auf, auf dem eine Plattform 8 angeordnet ist, wobei das Gestell 7 und die Plattform 8 als Schweißkonstruktion ausgeführt sind. Die Plattform 8 ist vom Personal begehbar und weist außen ein Geländer 23 auf. An dem Gestell 7 sind zwei gegenüberliegende Bolzen 9 radial beweglich angeordnet. Die beiden Bolzen 9 können in die unteren Bohrungen 3 eingeführt werden, die auf der Bohrungslinie 4 liegen. Oberhalb der Bolzen 9 befinden sich zwei Kreissägen 10, die in radialer Richtung teleskopierbar gehalten sind und dazu dienen, Sägeschnitte auf Höhe der Trennlinie 5 zu erzeugen, wobei dabei der Beton samt den darin angeordneten Spannlitzen durchtrennt werden kann. Die oberen Bohrungen 3 befinden sich oberhalb des Schwerpunkts eines Abschnitts des Turms 1, der sich von der Trennlinie 5 bis zur Oberkante des Turms 1 erstreckt und als Oberteil 11 des Turms 1 bezeichnet wird.

Dort, wo sich in Fig. 1 Antriebseinheiten 18 für die Kreissägen 10 befinden, ist die Plattform 8 balkonartig erweitert und dort weist sie Anschlagpunkte 12 für Sicherungsleinen zur Sicherung des Personals auf, das sich insbesondere im Bereich dieser balkonartigen Erweiterungen 20 aufhalten wird, um die Kreissägen 10 zu bedienen, beispielsweise um Sägeblätter 19 der Kreissägen 10 zu wechseln. In Fig. 1 nehmen die Kreissägen 10 eine Ausgangsstellung ein, in welcher sich die Antriebseinheiten 18 im Bereich der Erweiterungen 20 befinden. Wenn sich die Bühne 6 am Boden befindet, ist im Bereich der Erweiterungen 20 der Zugang zur Plattform 8 oder ein Verlassen der Bühne 6 über Türen 14 und Leitern 15 möglich. Leuchten 16 ermöglichen die Arbeit an den Kreissägen 10 sowie eine Kontrolle der Sägeschnitte auch bei ungünstigen Tageslichtverhältnissen.

In Fig. 1 sind Zungen 17 dargestellt, die von dem Gestell 7 und der Plattform 8 aus radial nach innen zum Turm 1 hin beweglich gehalten sind. Der freie Innendurchmesser der Bühne 6 ist in Anpassung an den bodennahen Außendurchmesser des Turms 1 so groß bemessen, dass sich im oberen Bereich des Turms 1 ein so weiter Ringspalt zwischen dem Turm 1 und der Plattform 8 ergibt, dass mittels der dargestellten sowie weiterer, beweglicher Zungen 22 dieser Ringspalt überbrückt werden kann, um eine Sturzsicherung für das Personal zu schaffen, wie später noch näher erläutert wird.

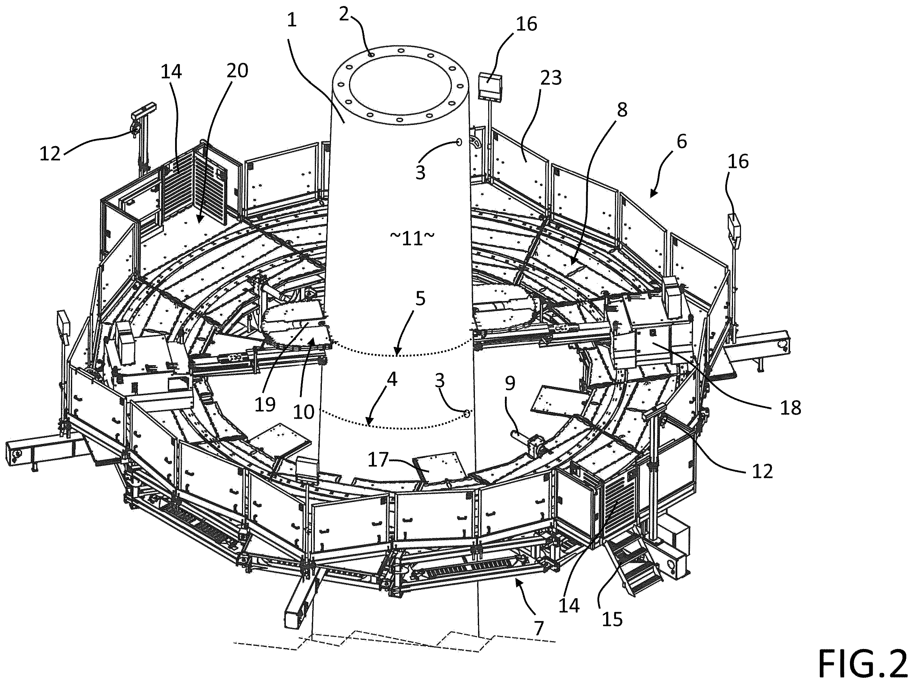

In Fig. 2 befindet sich das Gestell 7 der Bühne 6 unverändert am Turm 1. Die beiden Kreissägen 10 jedoch haben entlang der Trennlinie 5 umfangsmäßig Sägeschnitte von außen in den Turm 1 eingebracht. Wenn die Bewegung der Kreissägen 10 fortgesetzt wird, gelangt jede Kreissäge 10 nach einer Bogenbewegung von 180° zu derjenigen der beiden Erweiterungen 20, die der ursprünglichen Ausgangsstellung der Kreissäge 10 gegenüberliegt. Da nun ein vollständig zirkumferenter Sägeschnitt erzeugt worden ist, können in dieser 180°-Stellung die Sägeblätter 19 ausgewechselt werden gegen solche mit einer geringeren Materialstärke und mit einem größeren Durchmesser, um mittels des größeren Sägeblatt-Durchmessers die Schnitttiefe des Sägeschnitts zu vergrößern. Eine weitere Bogenbewegung von 180° führt die beiden Kreissägen 10 wieder zu ihrer jeweiligen Ausgangsstellung von Fig. 1 zurück.

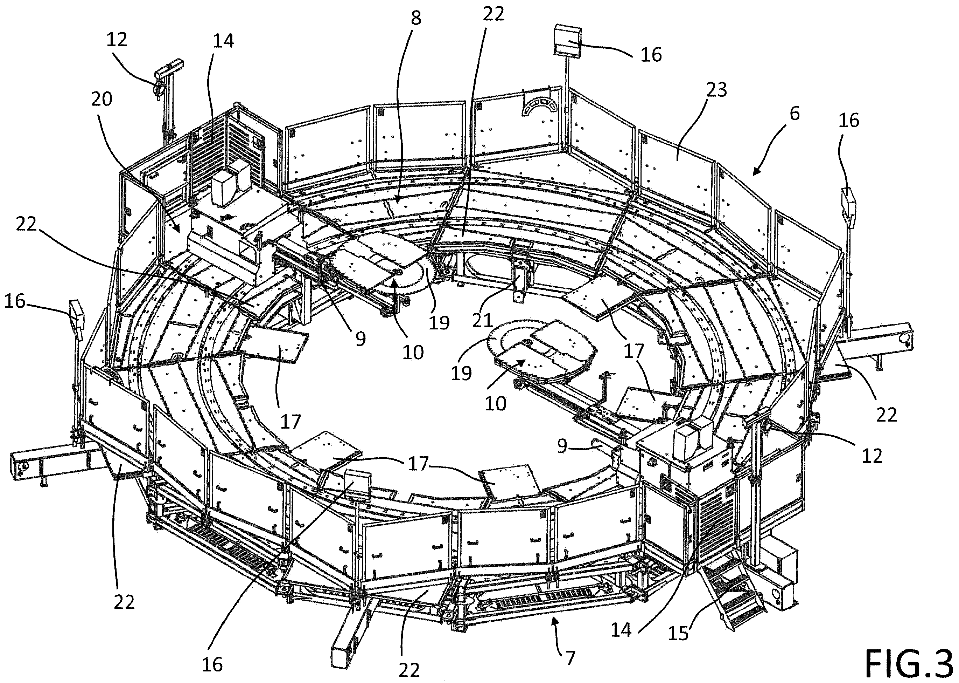

Fig. 3 zeigt die Bühne 6 ohne den Turm 1. Die Sägeblätter 19 der Kreissägen 10 sind so besser erkennbar. Weiterhin ist eines von vier Stützelementen 21 ersichtlich, die zu den Bolzen 9 versetzt am Umfang des Gestells 7 angeordnet sind und wie die Bolzen 9 in radialer Richtung beweglich sind. Während die beiden gegenüberliegenden Bolzen 9 ein Kipplager für die Bühne 6 bilden, werden Kippbewegungen der Bühne 6 am Turm 1 dadurch verhindert, dass die Stützelemente 21 soweit teleskopierbar und radial nach innen ausgefahren werden, dass sie dem Turm 1 anliegen und auf diese Weise eine Kippbewegung der Bühne 6 verhindern.

Weiterhin ist aus Fig. 3 ersichtlich, dass die Bühne 6 zusätzlich zu den nach innen ragenden schmalen Zungen 17 breite Zungen 22 aufweist, die in den Fig. 1 bis 3 in ihrer nach außen zurückgezogenen Stellung dargestellt sind, um einen möglichst großen freien Innendurchmesser der Bühne 6 zu ermöglichen.

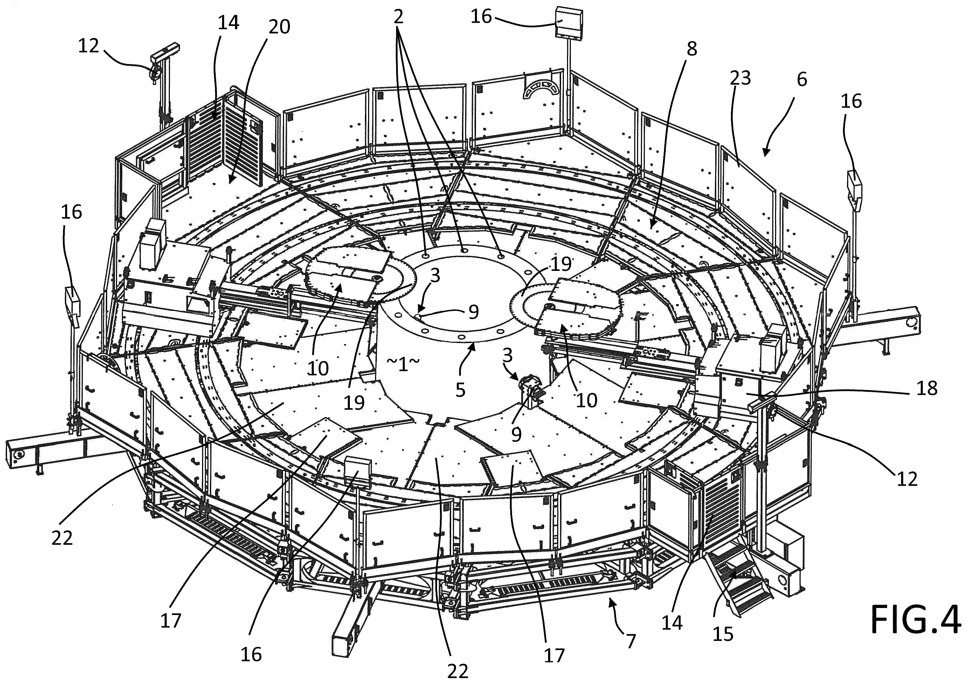

Fig. 4 zeigt die Bühne 6 während der Durchführung des Sägeschnitts entlang der Trennlinie 5, wobei das Oberteil 11 nicht dargestellt ist. Die Kreissägen 10 sind noch nicht in ihre Ausgangsstellung zurückkehrt, sie führen jedoch den letzten Schritt der mehreren Sägeschnitte aus und durchtrennen die Wand des Turms 1 vollständig, so dass anschließend das Oberteil 11 von dem restlichen Turm 1 abgehoben werden kann.

Insbesondere zeigt Fig. 4, dass mittels der schmalen und der breiten Zungen 17 und 22 der Zwischenraum beziehungsweise der Ringspalt zwischen der Plattform 8 und dem Turm 1 im Sinne einer Sturzsicherung weitgehend lückenlos abgedeckt ist.

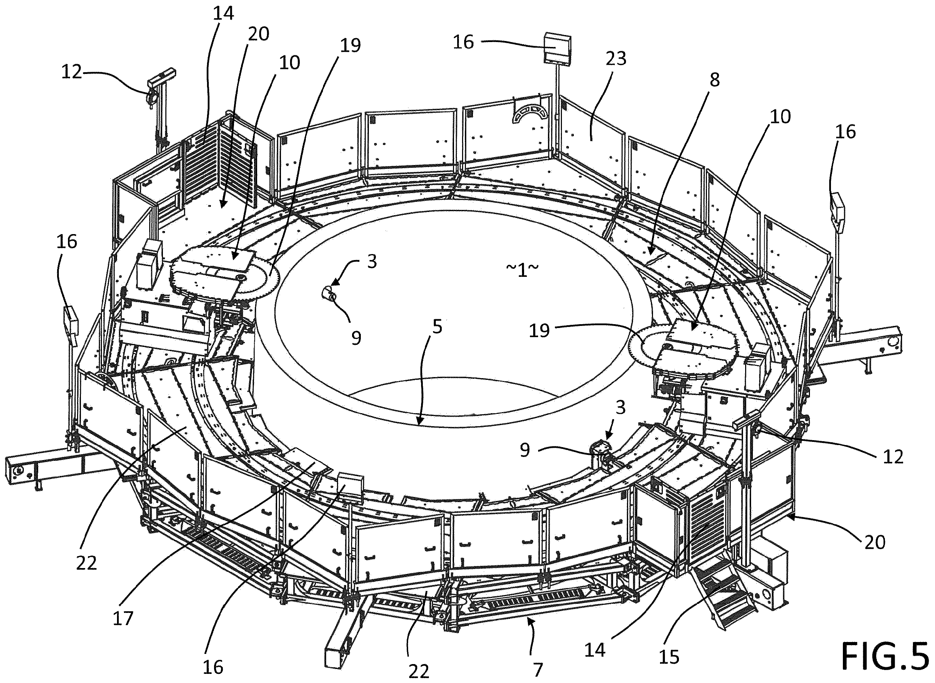

Fig. 5 zeigt eine Situation ähnlich Fig. 4, ebenfalls mit nicht dargestelltem Oberteil 11, jedoch wird der erste von mehreren Sägeschnitten durchgeführt, wobei die Sägeblätter 19 die Turmwand nicht vollständig durchtrennen. Weiterhin befindet sich die Bühne 6 im Vergleich zu den Fig. 1 bis 4 erheblich tiefer am Turm 1, so dass der Turm 1 in Fig. 5 einen größeren Durchmesser aufweist als in den Fig. 1 bis 4. Wieder schaffen die schmalen und die breiten Zungen 17 und 22 eine Sturzsicherung, wobei die schmalen Zungen 17 weniger weit nach innen ausgeschoben sind als in Fig. 4. Wie in Fig. 4 ist von dem in der Zeichnung rechts dargestellten Bolzen 9 lediglich das hintere, radial äußere Ende erkennbar, während für den in der Zeichnung links dargestellten Bolzen 9 ersichtlich ist, wie sich dieser durch die entsprechende Bohrung 3 bis in das Innere des Turms 1 erstreckt.

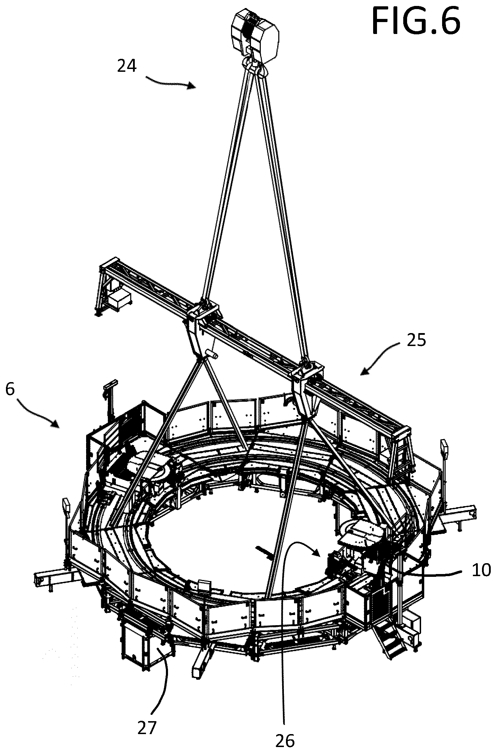

Für den kontrollierten Rückbau ist vorgesehen, ein Oberteil 11 eines Turms 1 abzutrennen und mittels Hebevorrichtung 24 zum Boden abzusenken. Anschließend kann die Traverse 25 aus den Bohrungen 3 des Oberteils 11 ausgehängt werden und, wie in Fig. 6 dargestellt, die Bühne 6 an eine Traverse 25 angehängt werden, welche ihrerseits von der Hebevorrichtung 24 gehalten wird. Anschließend kann die Bühne 6 aus den Bohrungen 3 des Abschnitts ausgehängt werden, der sich unmittelbar unterhalb des Oberteils 11 befindet, so dass die Bühne 6 ausschließlich von der Hebevorrichtung 24 bzw. von der Traverse 25 gehalten wird. Die in Fig. 6 dargestellte Bühne 6 weist zwei Kernbohrgeräte 26 auf, die gegenüberliegend oberhalb der radial beweglichen Bolzen 9 an dem Gestell 7 der Bühne 6 angeordnet sind. Die Bühne 6 wird nunmehr abgesenkt bis auf eine vorgesehene Höhe, in der mittels der Kernbohrgeräte 26 die Bohrungen 3 in den Turm 1 eingebracht werden können, in die die Bolzen 9 einführbar sind. Sowohl beim Einbringen der Trennschnitte als auch bei der Einbringung der Bohrungen 3 wird Wasser oder Ähnliches benötigt zur Kühlung, zum Abtransport von Schnittgut, als Gleitmittel und zur Unterbindung einer Staubentwicklung. Die erforderlichen Wassermengen werden in einem Wassertank 27 vorgehalten, welcher Unterhalb der Plattform 8 an dem Gestell 7 der Bühne 6 befestigt ist. Ein bessere Gleichgewichtslage der Bühne 6 kann dadurch erreicht werden, dass zwei Wassertanks 27 sich gegenüberliegend angeordnet sind und die Entnahme des Wassers aus beiden Wassertanks 27 im Wesentlichen gleichermaßen erfolgt, damit die Wassermengen in den Wassertanks 27 während des Rückbaus nicht wesentlich differieren.

Nachdem die Bohrungen 3 eingebracht worden sind kann die Bühne 6 wieder etwas angehoben werden bis die Bolzen 9 und die Bohrungen 3 auf gleicher Höhe angeordnet sind, so dass die die Bolzen 9 in radialer Richtung in die Bohrungen 3 eingeführt werden können und dadurch die Bühne 6 in den nächsttieferen Abschnitt unterhalb des Oberteils 11 eingehängt werden kann. Bevor die Trennschnitte eingebracht werden, wird die Traverse 25 in die Bohrungen 3 des Oberteils 11 eingehängt und mittels Hebevorrichtung 24 gegebenenfalls unter Zugspannung versetzt, um ein gewichtsbedingtes Einklemmen der Sägeblätter 19 durch das Oberteil 11 verhindern zu können. Das vollständig abgetrennte Oberteil 11 kann anschließend mittels der Hebevorrichtung 24 kontrolliert vom restlichen Turm 1 entfernt werden.

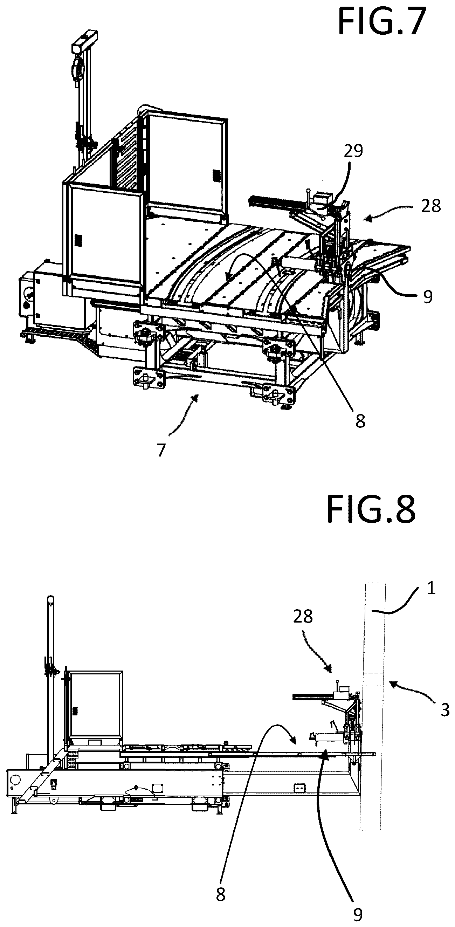

Fig. 7 zeigt einen Abschnitt einer Bühne 6 mit einer von einem Gestell 7 getragenen Plattform 8 in perspektivischer Ansicht. Oberhalb des Bolzens 9 ist eine Haltevorrichtung 28 für ein wahlweise montierbares Kernbohrgerät 26 angeordnet, wobei ein Schlitten 29 der Haltevorrichtung 28 eine Radialbewegung des Kernbohrgeräts 26 ermöglicht, so dass mit zunehmender Bohrtiefe das Kernbohrgerät 26 auf den Turm 1 zugeführt werden kann. Gleichzeitig kann dadurch eine im Wesentlichen orthogonale Bohrung sichergestellt werden, die förderlich ist, um sämtliche Bolzen problemlos in die Bohrungen einführen zu können. Wenigstens eine Haltevorrichtung weist zudem eine Höheneinstellung auf, so dass die Bohrungen auf einer im Wesentlichen waagerechten Bohrungslinie 4 angeordnet sind. Mittels Höheneinstellung der Haltevorrichtung 28 können somit Lageabweichungen ausgeglichen werden, sofern die Bühne 6 nicht in waage an der Hebevorrichtung 24 beziehungsweise an der Traverse 25 hängt.

Den Bühnenabschnitt aus Fig. 7 in einer Seitenansicht im Querschnitt zeigt Fig. 8. Durch die Anordnung der Haltevorrichtung 28 für ein Kernbohrgerät 26 jeweils oberhalb der Bolzen 9 gewährleistet, dass erstens die Bohrungen 3 auf einer im Wesentlichen waagerechten Bohrungslinie 4 anordnet sind. Zweitens durch eine weitestgehende lotrechte Anordnung von Kernbohrgerät 26 und Bolzen 9 kann eine laterale Abweichung der Bohrungen 3 minimiert werden, was zuträglich ist für ein verkantungsfreies Einführen der Bolzen 9 in die jeweilige Bohrung 3. Der Fig. 8 zu entnehmen ist weiterhin die Hubhöhe, die die Bühne 6 nach Einbringung der Bohrungen 3 mittels Hebevorrichtung 24 angehoben werden muss, um die Bolzen 9 in die Bohrungen 3 einführen zu können.

### Bezugszeichen:

- 1: Turm
- 2: Spannkanal
- 3: Bohrung
- 4: Bohrungslinie
- 5: Trennlinie
- 6: Bühne
- 7: Gestell
- 8: Plattform
- 9: Bolzen
- 10: Kreissäge
- 11: Oberteil
- 12: Anschlagpunkt
- 14: Tür
- 15: Leiter
- 16: Leuchte
- 17: Schmale Zunge
- 18: Antriebseinheit
- 19: Sägeblatt
- 20: Erweiterung
- 21: Stützelement
- 22: Breite Zunge
- 23: Geländer
- 24: Hebevorrichtung
- 25: Traverse
- 26: Kernbohrgerät
- 27: Wassertank
- 28: Haltevorrichtung
- 29: Schlitten

## Patentansprüche

1. Verfahren zum Rückbau eines aus einem Betonwerkstoff bestehenden Turms (1) einer Windkraftanlage,
mit den folgenden Verfahrensschritten:
a) sämtliche Bestandteile einer Kopfeinheit der Windkraftanlage,
umfassend unter anderem Rotorflügel, eine Nabenabdeckung und ein das obere Ende der Windkraftanlage bildendes Maschinenhaus samt den darin befindlichen Einbauten einschließlich eines elektrischen Generators, werden von dem Turm (1) demontiert und jeweils mittels einer Hebevorrichtung (24) kontrolliert auf den Boden, eine bereitgestellte Transporteinrichtung oder eine bereitgestellte Verarbeitungsanlage abgesenkt,
b) ein als Oberteil (11) bezeichneter oberer Abschnitt des Turms (1), der sich bis zum verbliebenen oberen Ende des Turms (1) erstreckt, wird von dem darunter befindlichen Rest des Turms (1) abgetrennt,
c) das abgetrennte Oberteil (1) wird mittels einer Hebevorrichtung (24) kontrolliert auf den Boden, eine bereitgestellte Transporteinrichtung oder eine bereitgestellte Verarbeitungsanlage bewegt,
d) die Schritte b) und c) werden wiederholt, bis der Turm (1) vollständig so weit demontiert ist, dass ein verbleibender Rest des Turms (1) vom Boden aus entfernt werden kann,
e) die abgetrennten Bestandteile der Windkraftanlage werden in der Form, in welcher sie nun vorliegen, abtransportiert
oder
f) zunächst in kleinere Bestandteile zerlegt oder in einer bereitgestellten Verarbeitungsanlage zerkleinert und anschließend abtransportiert,
wobei in den Turm (1) Bohrungen (3) eingebracht werden, **dadurch gekennzeichnet, dass**
eine Bühne (6) in die Bohrungen (3) eingehängt wird, und durch Sägeschnitte von der Bühne (6) aus das Oberteil (11) von dem darunter befindlichen Rest des Turms (1) abgetrennt wird.

2. Verfahren nach Anspruch 1,
**dadurch gekennzeichnet,**
**dass** der Turm (1) planerisch in mehrere Abschnitte unterteilt wird, die dazu bestimmt sind, nach und nach jeweils ein Oberteil (11) zu bilden,
und **dass** die Bohrungen (3) jeweils in einen Abschnitt oberhalb von dessen Schwerpunkt eingebracht werden.

3. Verfahren nach Anspruch 2,
**dadurch gekennzeichnet,**
**dass** die Bühne (6) in die Bohrungen (3) des Abschnitts eingehängt wird, der sich unmittelbar unterhalb des Oberteils (11) befindet.

4. Verfahren nach Anspruch 2 oder 3,
**dadurch gekennzeichnet,**
**dass** die Höhen der Abschnitte jeweils so bestimmt werden, dass das Gewicht jedes Abschnitts innerhalb der Gewichtsgrenzen eines vorbestimmten Höchstgewichts liegt.

5. Verfahren nach einem der vorhergehenden Ansprüche,
**dadurch gekennzeichnet,**
**dass** eine an die Hebevorrichtung (24) angehängte Traverse (25) in die Bohrungen (3) des Oberteils (11) eingehängt wird,
und **dass** während der Erzeugung der Sägeschnitte das Oberteil (11) mittels der Hebevorrichtung (24) und der Traverse (25) unter einer aufwärts gerichteten Zugspannung gehalten wird.

6. Verfahren nach einem der vorhergehenden Ansprüche,
**dadurch gekennzeichnet,**
**dass** zur Erzeugung der Sägeschnitte zunächst ein erstes Sägeblatt (19) mit einer ersten Schnittbreite verwendet wird,
und nach Erreichen einer bestimmten Schnitttiefe ein zweites Sägeblatt (19) mit einer zweiten Schnittbreite verwendet wird,
wobei die zweite Schnittbreite geringer ist als die erste.

7. Verfahren nach Anspruch 5, oder nach den Ansprüchen 5 und 6,
**dadurch gekennzeichnet,**
**dass**
• das Oberteil (11) nach seiner Abtrennung auf dem Rest des Turms (1) abgestellt wird,
• anschließend die Traverse (25) aus den Bohrungen (3) des Oberteils (11) ausgehängt wird,
• anschließend die Bühne (6) an die Hebevorrichtung (24) oder die daran hängende Traverse (25) angehängt wird,
• anschließend die Bühne (6) aus den Bohrungen (3) des Abschnitts ausgehängt wird, der sich unmittelbar unterhalb des Oberteils (11) befindet,
• anschließend die Bühne (6) abgesenkt und in die Bohrungen (3) des nächst tieferen Abschnitts eingehängt wird,
• anschließend die Bühne (6) von der Hebevorrichtung (24) oder der daran hängenden Traverse (25) ausgehängt wird,
• anschließend die Traverse (25) in die Bohrungen (3) des abgetrennten Oberteils (11) eingehängt wird,
• und anschließend das Oberteil (11) mittels der Hebevorrichtung (24) kontrolliert vom restlichen Turm (1) entfernt wird.

8. Verfahren nach Anspruch 2, oder nach Anspruch 2 und einem der Ansprüche 3 bis 6,
**dadurch gekennzeichnet,**
**dass**
• eine selbstkletternde Bühne (6) verwendet wird,
• und anschließend an das Abtrennen des jeweiligen Oberteils (11) die Bühne (6) mittels ihrer Kletterorgane unabhängig von der Hebevorrichtung (24) abgesenkt wird,
• anschließend die Bühne (6) in die tiefer liegenden Bohrungen (3) eingehängt wird,
• und währenddessen das abgetrennte Oberteil (11) von dem Turm (1) abgenommen wird.

9. Verfahren nach einem der Ansprüche 1 bis 6 oder 8,
**dadurch gekennzeichnet,**
**dass**
• eine selbstkletternde Bühne (6) verwendet wird,
• und die Bühne (6) in zuvor in den Turm (1) eingebrachte Bohrungen (3) eingehängt wird, die sich in einer ersten Höhe befinden,
• anschließend die Bühne (6) mittels erster Kletterorgane angehoben wird,
• von der Bühne (6) aus neue Bohrungen (3) in den Turm (1) eingebracht werden,
• anschließend zweite Kletterorgane der Bühne (6) in die neuen Bohrungen (3) in den Turm (1) eingehängt werden, die sich in einer zweiten, größeren Höhe befinden als die Bohrungen (3) der ersten Höhe,
• daraufhin die ersten Kletterorgane aus den Bohrungen (3) der ersten Höhe entfernt werden,
• und schließlich die Bühne (6) mittels der zweiten Kletterorgane in eine dritte, noch größere Höhe angehoben wird.

10. Verfahren nach einem der vorhergehenden Ansprüche,
wobei eine Bühne (6) verwendet wird,
• mit einem ringförmigen Gestell (7), das um einen freien Innenraum verläuft, dessen Durchmesser derart bemessen ist, dass dieser wenigstens dem Außendurchmesser des Turms (1) in der Höhe entspricht, wo die Verwendung der Bühne (6) vorgesehen ist,
• mit wenigstens zwei in radialer Richtung beweglichen, umfangsmäßig voneinander beabstandeten Vorsprüngen, die dazu bestimmt sind, wahlweise in Aussparungen des Turms (1) eingebracht zu werden und die Bühne (6) zu tragen, oder aus den Aussparungen herausgezogen zu werden,
• mit wenigstens einer Plattform (8), die für den Aufenthalt von Personen bestimmt ist,
• und mit einer Sturzsicherung, welche in radialer Richtung bewegliche Zungen (22) aufweist, die dazu bestimmt sind, an den Turm (1) angenähert zu werden.

## Claims

1. Method for dismantling a tower (1) of a wind turbine, which tower consists of a concrete material, comprising the following procedure steps:
a) dismounting from the tower (1) all the constituent parts of a head unit of the wind turbine,
comprising inter alia rotor blades, a hub cover and a machine housing, together with the internal components situated in the latter, including an electric generator, which machine housing forms the upper end of the wind turbine, and lowering said constituent parts, in each case by means of a lifting apparatus (24), to the ground, to a provided transport device, or to a provided processing installation, in a controlled manner,
b) detaching an upper portion, referred to as a top part (11), of the tower (1), which top part extends as far as the remaining upper end of the tower (1), from the rest of the tower (1) situated therebelow,
c) moving the detached top part (1) to the ground, to a provided transport device, or to a provided processing installation, in a controlled manner by means of a lifting apparatus (24),
d) repeating steps b) and c) until the tower (1) has been dismantled thoroughly so that a remaining part of the tower (1) can be removed from the ground,
e) transporting away the detached constituent parts of the wind turbine in the form in which they are then present,
or
f) firstly disassembling said detached constituent parts into smaller constituent parts or comminuting them in a provided processing installation and then transporting them away,
wherein bores (3) are formed in the tower (1), **characterized in that** a stage (6) is hooked into the bores (3),
and, from the stage (6), the top part (11) is detached from the rest of the tower (1) situated therebelow by way of sawing cuts.

2. Method according to Claim 1,
**characterized**
**in that**, in terms of planning, the tower (1) is subdivided into multiple portions which are intended to progressively form a top part (11) in each case,
and **in that** the bores (3) are in each case formed in a portion above the centre of gravity thereof.

3. Method according to Claim 2,
**characterized**
**in that** the stage (6) is hooked into the bores (3) of the portion which is situated directly below the top part (11).

4. Method according to Claim 2 or 3,
**characterized**
**in that** the heights of the portions are in each case determined so that the weight of each portion is within the weight limits of a predetermined maximum weight.

5. Method according to one of the preceding claims,
**characterized**
**in that** a crossmember (25) suspended from the lifting apparatus (24) is hooked into the bores (3) of the top part (11),
and **in that**, while the sawing cuts are being made, the top part (11) is held under an upwardly directed tension by means of the lifting apparatus (24) and the crossmember (25).

6. Method according to one of the preceding claims,
**characterized**
**in that**, for making the sawing cuts, use is firstly made of a first saw blade (19) with a first cutting width, and, after a specific cutting depth has been reached, use is made of a second saw blade (19) with a second cutting width,
wherein the second cutting width is smaller than the first.

7. Method according to Claim 5 or according to Claims 5 and 6,
**characterized**
**in that**
• the top part (11), after being detached, is set down on the rest of the tower (1),
• then the crossmember (25) is unhooked from the bores (3) of the top part (11),
• then the stage (6) is suspended from the lifting apparatus (24) or the crossmember (25) suspended therefrom,
• then the stage (6) is unhooked from the bores (3) of the portion which is situated directly below the top part (11),
• then the stage (6) is lowered and is hooked into the bores (3) of the next lower portion,
• then the stage (6) is released from the lifting apparatus (24) or the crossmember (25) suspended therefrom,
• then the crossmember (25) is hooked into the bores (3) of the detached top part (11),
• and then the top part (11) is removed in a controlled manner from the rest of the tower (1) by means of the lifting apparatus (24).

8. Method according to Claim 2 or according to Claim 2 and one of Claims 3 to 6,
**characterized**
**in that**
• use is made of a self-climbing stage (6),
• and, following the detachment of the respective top part (11), the stage (6) is lowered independently of the lifting apparatus (24) by means of its climbing elements,
• then the stage (6) is hooked into the bores (3) situated at a lower level,
• and, in the meantime, the detached top part (11) is taken off the tower (1).

9. Method according to one of Claims 1 to 6 or 8,
**characterized**
**in that**
• use is made of a self-climbing stage (6),
• and the stage (6) is hooked into bores (3) formed beforehand in the tower (1) that are situated at a first height,
• then the stage (6) is raised by means of first climbing elements,
• new bores (3) are formed in the tower (1) from the stage (6),
• then second climbing elements of the stage (6) are hooked into the new bores (3) in the tower (1), which are situated at a second height which is greater than the height of the bores (3) at the first height,
• then the first climbing elements are removed from the bores (3) at the first height,
• and finally the stage (6) is raised to a third, even greater height by means of the second climbing elements.

10. Method according to one of the preceding claims,
wherein use is made of a stage (6)
• having a ring-like framework (7) which runs around a free interior space whose diameter is such as to correspond at least to the outer diameter of the tower (1) at the height at which the stage (6) is intended to be used,
• having at least two radially movable projections which are spaced apart peripherally from one another and which are intended to be introduced selectively into cutouts of the tower (1) and to support the stage (6), or to be pulled out of the cutouts,
• having at least one platform (8) which is intended for accommodating persons,
• and having a fall-protection device which has radially movable tongues (22) which are intended to be made to approach the tower (1).

## Revendications

1. Procédé de démantèlement d'une tour (1) d'une éolienne, constituée d'un matériau en béton,
avec les étapes de procédé suivantes :
a) tous les composants d'une unité de tête de l'éolienne,
comprenant entre autres les pales de rotor, un capot de moyeu et une nacelle formant l'extrémité supérieure de l'éolienne, avec les éléments qui s'y trouvent, y compris un générateur électrique, sont démontés de la tour (1) et descendus de manière contrôlée au moyen d'un dispositif de levage (24) sur le sol, sur un appareil de transport mis à disposition ou sur une installation de traitement mise à disposition,
b) une section supérieure de la tour (1), nommée partie supérieure (11), qui s'étend jusqu'à l'extrémité supérieure restante de la tour (1), est séparée du reste de la tour (1) se trouvant en dessous,
c) la partie supérieure séparée (1) est déplacée de manière contrôlée au moyen d'un dispositif de levage (24) sur le sol, sur un appareil de transport mis à disposition ou sur une installation de traitement mise à disposition,
d) les étapes b) et c) sont répétées jusqu'à ce que la tour (1) soit entièrement démontée de manière à ce qu'un reste de la tour (1) puisse être retiré depuis le sol,
e) les constituants séparés de l'éolienne sont évacués sous la forme sous laquelle ils se présentent actuellement,
ou
f) d'abord démontés en constituants plus petits ou broyés dans une installation de traitement mise à disposition, et ensuite évacués,
des alésages (3) étant pratiqués dans la tour (1), **caractérisé en ce qu'**une plate-forme (6) est suspendue dans les alésages (3),
et la partie supérieure (11) est séparée du reste de la tour (1) se trouvant en dessous par des coupes à la scie depuis la plate-forme (6).

2. Procédé selon la revendication 1,
**caractérisé**
**en ce que** la tour (1) est, au stade de la planification, subdivisée en plusieurs sections qui sont destinées à former, l'une après l'autre, respectivement une partie supérieure (11),
et **en ce que** les alésages (3) sont pratiqués respectivement dans une section située au-dessus de son centre de gravité.

3. Procédé selon la revendication 2,
**caractérisé**
**en ce que** la plate-forme (6) est accrochée dans les alésages (3) de la section qui se trouve immédiatement en dessous de la partie supérieure (11).

4. Procédé selon la revendication 2 ou 3,
**caractérisé**
**en ce que** les hauteurs des sections sont déterminées de manière à ce que le poids de chaque section se situe dans les limites de poids d'un poids maximal prédéfini.

5. Procédé selon l'une quelconque des revendications précédentes,
**caractérisé**
**en ce qu'**une traverse (25) suspendue au dispositif de levage (24) est accrochée dans les alésages (3) de la partie supérieure (11),
et **en ce que**, pendant la réalisation des coupes à la scie, la partie supérieure (11) est maintenue sous une contrainte de traction dirigée vers le haut au moyen du dispositif de levage (24) et de la traverse (25).

6. Procédé selon l'une quelconque des revendications précédentes,
**caractérisé**
**en ce qu'**une première lame de scie (19) ayant une première largeur de coupe est d'abord utilisée pour réaliser les coupes à la scie,
et, après avoir atteint une profondeur de coupe déterminée, une deuxième lame de scie (19) ayant une deuxième largeur de coupe est utilisée,
la deuxième largeur de coupe étant inférieure à la première.

7. Procédé selon la revendication 5 ou selon les revendications 5 et 6,
**caractérisé**
**en ce que**
• la partie supérieure (11) est déposée sur le reste de la tour (1) après sa séparation,
• ensuite, la traverse (25) est retirée des alésages (3) de la partie supérieure (11),
• ensuite, la plate-forme (6) est accrochée au dispositif de levage (24) ou à la traverse (25) qui y est suspendue,
• ensuite, la plate-forme (6) est décrochée des alésages (3) de la section se trouvant immédiatement en dessous de la partie supérieure (11),
• ensuite, la plate-forme (6) est abaissée et accrochée dans les alésages (3) de la section inférieure suivante,
• ensuite, la plate-forme (6) est décrochée du dispositif de levage (24) ou de la traverse (25) qui y est suspendue,
• ensuite, la traverse (25) est accrochée dans les alésages (3) de la partie supérieure séparée (11),
• et ensuite la partie supérieure (11) est retirée de manière contrôlée du reste de la tour (1) au moyen du dispositif de levage (24).

8. Procédé selon la revendication 2, ou selon la revendication 2 et l'une quelconque des revendications 3 à 6,
**caractérisé**
**en ce que**
• une plate-forme auto-grimpante (6) est utilisée,
• et, après la séparation de la partie supérieure respective (11), la plate-forme (6) est abaissée au moyen de ses organes de montée indépendamment du dispositif de levage (24),
• puis la plate-forme (6) est accrochée dans les alésages (3) situés plus bas,
• et pendant ce temps, la partie supérieure séparée (11) est retirée de la tour (1).

9. Procédé selon l'une quelconque des revendications 1 à 6 ou 8,
**caractérisé**
**en ce que**
• une plate-forme auto-grimpante (6) est utilisée,
• et la plate-forme (6) est accrochée dans des alésages (3) préalablement pratiqués dans la tour (1), qui se trouvent à une première hauteur,
• ensuite, la plate-forme (6) est soulevée au moyen de premiers organes de montée,
• de nouveaux alésages (3) sont pratiqués dans la tour (1) depuis la plate-forme (6),
• ensuite, les deuxièmes organes de montée de la plate-forme (6) sont accrochés dans les nouveaux alésages (3) pratiqués dans la tour (1), qui se trouvent à une deuxième hauteur supérieure à celle des alésages (3) de la première hauteur,
• les premiers organes de montée sont alors retirés des alésages (3) de la première hauteur,
• et enfin, la plate-forme (6) est soulevée à une troisième hauteur encore plus élevée au moyen des deuxièmes organes de montée.

10. Procédé selon l'une quelconque des revendications précédentes,
dans lequel une plate-forme (6) est utilisée,
• avec un châssis annulaire (7) qui s'étend autour d'un espace intérieur libre dont le diamètre est dimensionné de telle sorte qu'il corresponde au moins au diamètre extérieur de la tour (1) à la hauteur où l'utilisation de la plate-forme (6) est prévue,
• avec au moins deux saillies mobiles dans la direction radiale, espacées les unes des autres sur la circonférence, qui sont destinées à être insérées au choix dans des évidements de la tour (1) et à supporter la plate-forme (6), ou à être retirées des évidements,
• avec au moins une plate-forme (8) destinée à accueillir des personnes,
• et avec un dispositif de sécurité anti-chute qui présente des languettes (22) mobiles dans la direction radiale, destinées à être rapprochées de la tour (1).
